# EUROPEAN PATENT APPLICATION

(11) **EP 4 804 091 A1**
(43) Date of publication of application: **09.09.2026**
(21) Application number: 24885664.3
(22) Date of filing: 28.10.2024
(51) Int. Cl.: G06N 20/00

(54) **FORMULA-DRIVEN SUPERVISED LEARNING METHOD AND SYSTEM FOR AI MODEL, AND METHOD AND SYSTEM FOR CREATING TRANSFER-LEARNED AI MODEL**

(30) Priority: 31.10.2023 JP 2023186979
(71) Applicant: National Institute of Advanced Industrial Science and Technology, Chiyoda-ku Tokyo 100-8921 (JP)
(72) Inventor: NOSATO Hirokazu, Ibaraki 305-8560 (JP); KOUNOSU Ryuunosuke, Ibaraki 305-8560 (JP); KIM Wonjik, Ibaraki 305-8560 (JP)
(74) Representative: Wilson Gunn
(86) International application number: PCT/JP2024/038350
(87) International publication number: WO 2025/094891

(57) **Abstract**

A method for performing formula-driven supervised learning method for AI model and system therefore are provided, which pre-train an AI model with practical accuracy and with transferability to a target task, surpassing conventional techniques. The model formula-driven supervised learning system 1 comprises a first image dataset generation section 11, a second image dataset generation section 12, a mixed database generation section 13 including a mixed database 13A, and an AI-model learning section 14. The mixed database generation section 13 generates the mixed database 13A by mixing a first type of image dataset DS1 and a second type of image dataset DS2. The AI-model learning section 14 pre-trains the AI model using the mixed database 13A.

## Description

### TECHNICAL FIELD

The present invention relates to a formula-driven supervised learning method for AI model based on automatically generated images and a system therefor, and to a method for generating a transfer-learned AI model and system therefor.

### BACKGROUND ART

Artificial intelligence (AI) models based on convolutional neural networks (CNN), which are used in the field of image classification, generally require an enormous amount of training data (images and their correct labels) for learning. For examinations in clinical departments where the number of tests such as radiographic images, MRI images, and gastrointestinal endoscopic images is large and the number of physicians is also relatively high, research and development of diagnostic-support AI has progressed, and medical image diagnostic support technologies using AI are being used even in actual clinical practice. However, it is not always possible to collect a sufficient amount of training data for CNN learning in all medical image diagnostic tasks. Therefore, research and development of AI targeting image diagnoses for which sufficient training data cannot be collected has limitations, and the introduction of methods for training diagnostic support AI models using a small amount of training data has been anticipated. In such cases, methods such as transfer learning and data augmentation have been used as one of the solutions in research and development. In transfer learning, it is common to perform learning in a pre-training stage before learning the dataset of the target task, using a general-purpose large-scale dataset such as real images. In this process, when large-scale real image datasets such as ImageNet are used for AI learning, problems arise such as copyright issues, data bias, labeling errors and human cost due to manual annotation, and, depending on the database, the inability to access the images themselves. Particularly in the medical field, transparency of the data used for AI learning is extremely important.

As a measure to address such problems, as disclosed in Non-Patent Literature (paper) 1, "formula-driven supervised learning (FDSL)" has been proposed, in which a dataset of fractal images or contour images is generated from mathematical formulas and used for pre-training a CNN model for image recognition AI. This formula-driven supervised learning is a technique in which, as a pre-training dataset, synthetic images are generated by mathematical formulas, automatically labeled by the parameters used for the generation, and pre-training is performed using the automatically generated images and labels. FIG. 9 shows a figure including the formulas and parameters disclosed in Non-Patent Literature 1. The developers of this "formula-driven supervised learning" discovered that the shapes and patterns drawn by lines defined by mathematical formulas are important, and that when a CNN model is trained on the generated fractal images, it can acquire feature representations similar to those obtained when trained on real images. When the formula-driven supervised learning is used, learning can be performed using only synthetic images generated from the formulas, without using real images, so it is possible to eliminate problems that arise when training with real images, such as copyright issues in commercial use, privacy issues, and labeling errors.

It should be noted that, in the technique described in Non-Patent Literature 1, a dataset called FractalDB is constructed using fractal geometry.

Furthermore, technologies that develop the formula-driven supervised learning disclosed in Non-Patent Literature 1 are disclosed in Non-Patent Literatures 2 and 3. In the technique disclosed in Non-Patent Literature 2, a dataset with improved contour shapes (RadialContourDB) and ExFractalDB (Extended FractalDB), which is an improved version of FractalDB, are used for pre-training. In the technique disclosed in Non-Patent Literature 3, a dataset with further improved contour shapes (VisualAtomDB) is used for pre-training.

Further, Non-Patent Literature 4 shows results verifying that ExFractalDB is effective in mathematics-driven supervised learning for medical image tasks.

### PRIOR ART DOCUMENTS

### NON-PATENT LITERATURES

Non-Patent Literature 1
   Kataoka, K. Okayasu, A. Matsumoto, E. Yamagata, R. Yamada, N. Inoue, A. Nakamura and Y. Satoh, Pre-training without Natural Images, Proc. IEEE/CVF Asian Conference on Computer Vision (ACCV), pp. 583-600, December 2020.
Non-Patent Literature 2
   Kataoka, R. Hayamizu, R. Yamada, K. Nakashima, S. Takashima, X. Zhang, E. J. Martinez-Noriega, N. Inoue and R. Yokota, Replacing Labeled Real-image Datasets with Auto-generated Contours, Proc. IEEE/CVF Conference on Computer Vision and Pattern Recognition (CVPR), pp. 21200-21209, 2022.
Non-Patent Literature 3
   Takashima, R. Hayamizu, N. Inoue, H. Kataoka, and R. Yokota, Visual Atoms: Pre-training Vision Transformers with Sinusoidal Waves, Proc. IEEE/CVF Conference on Computer Vision and Pattern Recognition (CVPR), pp. 18579-18588, 2023.
Non-Patent Literature 4
   A paper presented by Takato Endo, Hideya Takahashi, and Eisaku Maeda, titled "Effectiveness of Mathematics-Driven Supervised Learning in Medical Image Tasks,"
[IEICE Technical Report, PRMU2022-71, IBISML2022-7 (2023-03)].

### SUMMARY OF THE INVENTION

### PROBLEMS TO BE SOLVED BY THE INVENTION

In the formula-driven supervised learning proposed in Non-Patent Literature 1, real images photographed in the real world are not used; instead, a large number of images are generated from randomly determined mathematical formulas, and an AI model that can be transferred to a target task is pre-trained (supervised learning) using those images. In order to generate fractal or contour images, hyperparameters are required at the time of data generation, and one combination is randomly selected from the range of hyperparameters, and this is treated as one class (a combination of hyperparameters). From this one class, for example, approximately 1000 images are generated, and approximately 1000 such classes are prepared, and learning is performed in the manner of supervised learning as a task of classifying these 1000 images for each class. In formula-driven supervised learning, the higher the complexity of the mathematically generated images, the higher the accuracy becomes. The complexity of the mathematically generated images can be increased by adjusting the image generation parameters for formula-driven supervised learning. In particular, in Non-Patent Literature 2, it has been confirmed that when training with a dataset (RCDB) specialized for drawing object contours, performance equivalent to FractalDB can be obtained.

However, as shown in Non-Patent Literature 1, Non-Patent Literature 2, or Non-Patent Literature 3, there has been a limitation in improving the performance of an AI model by pre-training an AI model that can be transferred to a target task using images generated by formula-driven supervised learning employing one type of mathematical formula. In particular, when the target task becomes complex, although the performance is higher than that of other methods, the classification accuracy itself is low, and it has been difficult to utilize such models in practical applications.

The object of the present invention is to provide a formula-driven supervised learning method for AI model and a system therefor that pre-trains an AI model capable of being transferred to a target task with practical accuracy, more than in the prior art.

Another object of the present invention is to provide a method for generating a transfer-learned AI model and a system therefor that transfer learning is performed using an AI model pre-trained by the formula-driven supervised learning method and teacher real images of the target task, thereby generating a transfer-learned AI model.

### MEANS FOR SOLVING THE PROBLEMS

The formula-driven supervised learning method for an AI model of the present invention generates two or more image datasets, each consisting of two or more types of images that are respectively automatically generated using two or more mathematical formulas, by performing the formula-driven supervised learning using mathematical formulas, and generates a mixed database by mixing these two or more image datasets, and pre-trains the AI model using the mixed database. This AI model is a generic AI model serving as a basis that can be used when generating an AI model for a target task. According to the present invention, it is possible to provide a pre-trained AI model that can be applied to the target task with higher accuracy than an AI model that has been pre-trained using one type of image dataset consisting of images automatically generated using one mathematical formula described in Non-Patent Literatures 1 to 3.

In order to specify the present invention more concretely, in one aspect of the present invention, a first type of image dataset consisting of images automatically generated using a first mathematical formula is generated, and a second type of image dataset consisting of images automatically generated using a second mathematical formula is generated. The first mathematical formula and the second mathematical formula may be the same formula or may be different formulas. When the same formula is used, it is sufficient to make them substantially different formulas by changing the parameters used. Then, a mixed database obtained by mixing the first type of image dataset and the second type of image dataset is generated, and the AI model is pre-trained using this mixed database. Here, the mixed database means a database in which the automatically generated images of the first type of image dataset and the automatically generated images of the second type of image dataset are mixed in accordance with a random manner or a predetermined rule. The predetermined rule and the mixing ratio between the automatically generated images of the first type of image dataset and the automatically generated images of the second type of image dataset used for generating the mixed database may be determined by performing preliminary experiments so that the resulting model can be applied to the target task with higher accuracy. When the mixing ratio determined based on the preliminary experiments are used, it becomes possible, through pre-training, to provide an AI model that can be applied to the target task with higher accuracy than an AI model generated by the technique described in Non-Patent Literatures 1 to 3, which performs pre-training using an image dataset generated using a single mathematical formula. That is, the pre-trained AI model generated according to the present invention can be applied to the target task with higher accuracy than the AI model pre-trained using one type of image dataset consisting of images automatically generated using one mathematical formula as described in Non-Patent Literatures 1 to 3.

The first mathematical formula is preferably a formula that generates an image dataset of shapes or patterns, and the second mathematical formula is preferably a formula that generates an image dataset of contour images. As for the mathematical formulas used when automatically generating images of a target task for formula-driven supervised learning, their use individually has already been disclosed in Non-Patent Literatures 1 to 3, and therefore they can certainly be put into practical use. However, these literatures neither disclose nor suggest generating a mixed database.

As an example of an AI model that can be used for pre-training, there is an endoscopic diagnostic support AI model. The endoscopic images targeted by the endoscopic diagnostic support AI model possess all of the above-described problems that arise when collecting real images. Therefore, the application of the present invention is suitable. Among endoscopic diagnostic support AI models, the suitability of applying the present invention to a cystoscopic diagnostic support AI model is supported by experiments. The mixing ratio between the first type of image dataset and the second type of image dataset is determined according to the target task. Incidentally, when generating a cystoscopic diagnostic support AI model, a preferable mixing ratio between the first type of image dataset and the second type of image dataset during pre-training is preferably 1:3 to 3:1.

In the formula-driven supervised learning method of the AI model of the present invention, in order to make the pre-trained AI model generated using the mixed database into an AI model that is actually used for a target task, it is preferable to generate a transfer-learned AI model by performing transfer learning (two-stage learning) for each target task using the pre-trained AI model. When constructing an endoscopic diagnostic support AI model that classifies whether or not a lesion is present in an image, it is preferable to change the fully connected layer to a binary classification based on whether the target (lesion) is included in the image, and to perform transfer learning on all layers of the pre-trained AI model. Furthermore, when constructing an endoscopic diagnostic support AI model that detects where a lesion is located in an image, the fully connected layer may be changed to pixel-level classification that determines, for each pixel in the image, whether it corresponds to the target (lesion), and all layers of the pre-trained AI model may be subjected to transfer learning.

The present invention can be understood as a system for performing formula-driven supervised learning for an AI model that is executed using a computer. A more specific formula-driven supervised learning system for an AI model according to the present invention includes: a first image dataset generation section that generates a first type of image dataset consisting of images automatically generated using a first mathematical formula; a second image dataset generation section that generates a second type of image dataset consisting of images automatically generated using a second mathematical formula; a mixed database generation section that generates a mixed database obtained by mixing the first type of image dataset and the second type of image dataset; and an AI model learning section that pre-trains an AI model using the mixed database. Needless to say, two or more image datasets, each consisting of two or more types of images automatically generated respectively using two or more mathematical formulas, may be mixed to generate the mixed database.

The present invention can also be understood as a system for generating a transfer-learned AI model, the system being provided with a transfer learning section that performs transfer learning using the AI model that has been pre-trained by the system for performing formula-driven supervised learning for an AI model of the present invention, thereby generating a transfer-learned AI model.

### BRIEF DESCRIPTION OF THE DRAWINGS

FIG. 1 is a diagram used to explain an outline of an embodiment of the formula-driven supervised learning method and system for an AI model based on automatically generated images, and the method and system for generating a transfer-learned AI model, according to the present invention.
FIG. 2 is a block diagram showing a schematic configuration of a system for generating a transfer-learned AI model, the system being provided with a formula-driven supervised learning system for an AI model that pre-trains an AI model for a target task using automatically generated images of the target task, in order to realize the concept of FIG. 1.
FIG. 3 is a diagram showing samples of cystoscopic images.
FIG. 4 is a diagram showing classification performance of an AI model for each pre-training learning database.
FIG. 5 is a diagram showing a comparison between classification performance of the AI model and classification performance of physicians.
FIG. 6 is a diagram showing, among the classification performance of the AI model for each pre-training learning database, the accuracy rate with respect to the usage ratio of cystoscopic images of the target task.
FIG. 7 is a diagram showing, among the classification performance of the AI model for each pre-training learning database, the Youden index with respect to the usage ratio of cystoscopic images of the target task.

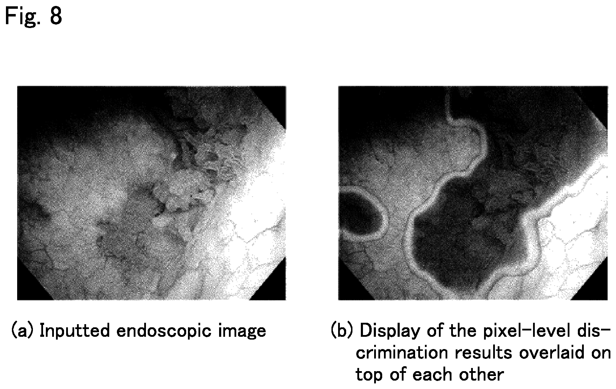

FIG. 8 is a diagram in which the result of pixel-level lesion classification performed by an AI model pre-trained with automatically generated images is superimposed on an input cystoscopic image.
FIG. 9 is a diagram including the formulas and parameters shown in Non-Patent Literature 1.

### EMBODIMENTS FOR CARRYING OUT THE INVENTION

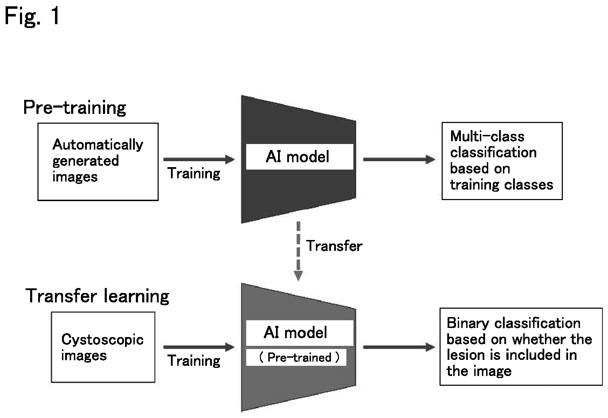

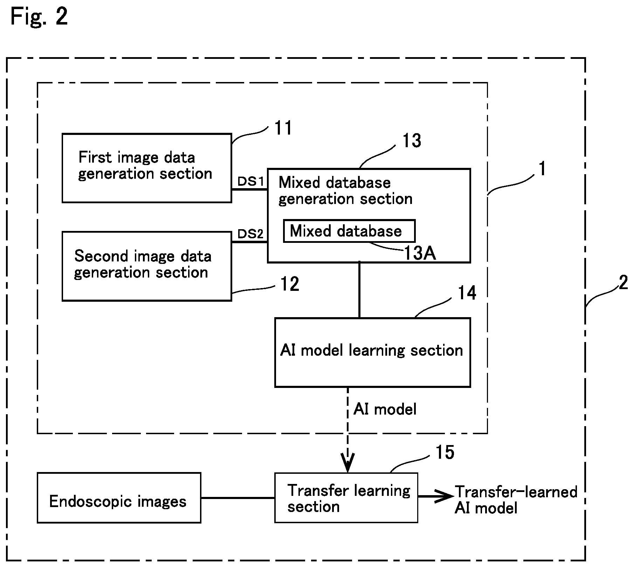

The embodiments of the present invention will be described in detail below with reference to the drawings. FIG. 1 is a diagram used to explain an outline of an embodiment of the method for generating a transfer-learned AI model and the system therefore of the present invention, in which the transfer-learned AI model is generated using an AI model that has been pre-trained by the method for performing formula-driven supervised learning for AI model and system therefore. FIG. 2 is a block diagram showing a schematic configuration of the system 2 for generating the transfer-learned AI model, the system 2 being provided with the system 1 for performing formula-driven supervised learning for an AI model that pre-trains an AI model using multiple types of automatically generated images, in order to realize the concept of FIG. 1. The means constituting each block of the system shown in FIG. 2 are implemented inside a computer by installing software on the computer. It goes without saying that the system shown in FIG. 2 may also be configured by constructing the first image data generation section 11, the second image data generation section 12, the mixed database generation section 13, the AI model learning section 14, and the transfer learning section 15, respectively, with hardware such as storage devices, arithmetic devices, and control devices.

In the embodiment of FIG. 2, examples of transfer-learned AI models generated by transfer learning of a pre-trained AI model include an endoscopic diagnostic support AI model and a cystoscopic diagnostic support AI model. The endoscopic images targeted by the endoscopic diagnostic support AI model possess all of the aforementioned problems that arise when collecting real images. Therefore, the application of the present invention is suitable. In particular, among endoscopic diagnostic support AI models, the suitability of applying the present invention to the cystoscopic diagnostic support AI model is supported by experiments described later.

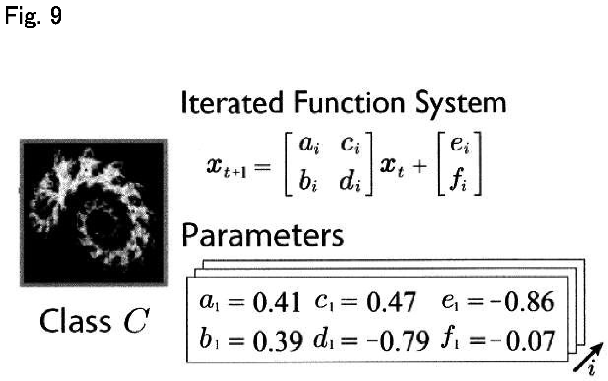

In the embodiment, the AI-model formula-driven supervised learning system 1 is composed of a first image dataset generation section 11, a second image dataset generation section 12, a mixed database generation section 13 that incorporates a mixed database 13A, and an AI model learning section 14. The system 2 for generating a transfer-learned AI model is provided with a transfer learning section 15 that performs transfer learning using an AI model pre-trained by the AI-model formula-driven supervised learning system 1, thereby generating a transfer-learned AI model. The first image dataset generation section 11 generates a first type of image dataset DS1 consisting of images automatically generated using a first mathematical formula. The second image dataset generation section 12 generates a second type of image dataset DS2 consisting of images automatically generated using a second mathematical formula. For example, the first mathematical formula is a formula that generates the image dataset DS1 of shapes or patterns, and the second mathematical formula is a formula that generates the image dataset DS2 of contour images. The mathematical formulas that can be used when automatically generating images for formula-driven supervised learning have already been disclosed as being used individually in Non-Patent Literatures 1 to 3. In the present embodiment, known formulas disclosed in Non-Patent Literature 1, shown in FIG. 9, are used. It should be noted that the first mathematical formula and the second mathematical formula may be the same formula or may be different formulas. When the same formula is used, appropriate parameter modifications may be made according to the nature of the target task to be addressed.

The mixed database generation section 13 generates a mixed database 13A obtained by mixing the first type of image dataset DS1 and the second type of image dataset DS2. The AI model learning section 14 then pre-trains an AI model using the mixed automatically generated images within the mixed database 13A. This pre-trained AI model is a fundamental, general-purpose AI model that can be used when generating AI models for many target tasks.

The mixed database 13A is a database in which the automatically generated images of the first type of image dataset DS1 and the automatically generated images of the second type of image dataset DS2 are mixed in accordance with a random manner or a predetermined rule. The predetermined rule and the mixing ratio between the automatically generated images of the first type of image dataset DS1 and the automatically generated images of the second type of image dataset DS2 used for generating the mixed database 13A are determined by conducting preliminary experiments according to the target task. Incidentally, in the experiment described below, the mixing ratio between the first type of image dataset DS1 and the second type of image dataset DS2 is 1:1. In preliminary experiments, it is ideal to determine a mixing ratio that yields an AI model capable of exhibiting higher classification performance in all evaluation metrics than in the case of pre-training using an image dataset generated with a single formula, as in the conventional techniques disclosed in Non-Patent Literatures 1 to 3.

A comparison was made between a case in which a pre-trained AI model is used that has been pre-trained by formula-driven supervised learning using a single mathematical formula described in Non-Patent Literature 1, the pre-training being performed with one type of image dataset composed of automatically generated images, and a case in which a transfer-learned AI model is used, the transfer-learned AI model being obtained by further performing transfer learning (two-stage learning), described later, so as to correspond to the target task using the pre-trained AI model that has been pre-trained according to the present embodiment. As a result, the case of using the transfer-learned AI model exhibited, in principle, higher classification performance in all evaluation metrics.

The transfer learning section 15 of the system 2 for generating a transfer-learned AI model according to the present embodiment performs pre-training of an AI model using the AI-model formula-driven supervised learning system 1, and performs transfer learning using the AI model that has undergone this pre-training. In a case where the target task for which the pre-trained AI model is to be transfer-learned is endoscopic diagnosis that classifies whether or not a lesion is present in an image, the transfer learning section 15 modifies the fully connected layer to a binary classification based on whether the image contains a lesion, and performs transfer learning on all layers of the pre-trained AI model to construct an endoscopic diagnostic support AI model as the transfer-learned AI model. Further, in a case where an endoscopic diagnostic support AI model is to be constructed that detects where a lesion is located within an image, the fully connected layer may be modified to pixel-level classification that determines, for each pixel in the image, whether it corresponds to a target (lesion), and all layers of the pre-trained AI model may be transfer-learned. The performance of the AI model obtained through this transfer learning has been confirmed by experiments described later.

### (Experimental example of the cystoscopic diagnostic support AI model)

When generating a transfer-learned cystoscopic diagnostic support AI model using the present embodiment, the AI model that has been pre-trained by the AI-model formula-driven supervised learning system 1 is subjected to transfer learning using cystoscopic images, which are real images. That is, in the first stage of learning (pre-training), pre-training is performed using the AI model formula-driven supervised learning system 1. In the second stage of learning, the transfer learning section 15 modifies the final layer (fully connected layer) of the pre-trained AI model (ResNet50) to a binary classification based on whether the image contains a lesion, and performs transfer learning on all layers of the AI model so as to construct a cystoscopic diagnostic support AI model that diagnoses cystoscopic images.

Specifically, it was assumed that, in the cystoscopic images serving as the target, both contour features and texture features are strongly related to distinguishing between lesion mucosa and normal mucosa. As the image datasets generated using the mathematical formulas in the formula-driven supervised learning method, a first type of image dataset DS1 was generated using a first mathematical formula, and a second type of image dataset DS2 was generated using a second mathematical formula. In the following description, the mixed database generated through this process is referred to as the Mix database (MixDB).

### (Outline of the experiment)

To verify the effectiveness of the method of the present invention, a basic AI model was generated by performing pre-training using the AI-model formula-driven supervised learning system 1, and the classification performance of the AI model obtained by performing transfer learning on the pre-trained AI model using cystoscopic images was evaluated through the following three experiments.

In Experiment 1, a comparison was made between the classification performance obtained when using an AI model that had been pre-trained using automatically generated images, and the classification performance obtained when using an AI model that had been trained solely with actual cystoscopic images.

In Experiment 2, a comparison was made between the classification performance obtained when using an AI model that had been pre-trained using automatically generated images, and the classification performance of urologists as reported in the paper described in Non-Patent Literature 5 below.

### (Non-Patent Literature 5)

A. Ikeda, H. Nosato, Y. Kochi, T. Kojima, K. Kawai, H. Sakanashi, M. Murakawa and H. Nishiyama, Support System of Cystoscopic Diagnosis for Bladder Cancer Based on Artificial Intelligence, Journal of Endourology, vol.34, issue.3, pp.352-358, March 2020

In Experiment 3, after generating an AI model that had been pre-trained using automatically generated images, a comparison was made between the classification performance of an AI model that was transfer-learned using a small amount (25%) of cystoscopic images, as compared with Experiment 1, and the classification performance obtained when learning was performed using only a small amount (25%) of cystoscopic images, and these results were compared with the results of Experiment 1, in which transfer learning was performed using 100% of the cystoscopic images.

In this experiment, a five-fold cross-validation was used, in which four-fifths of the cystoscopic image learning data serving as the target task were used for training and the remaining one-fifth was used for validation, and the average values of the five models were used as the basis for evaluating classification performance.

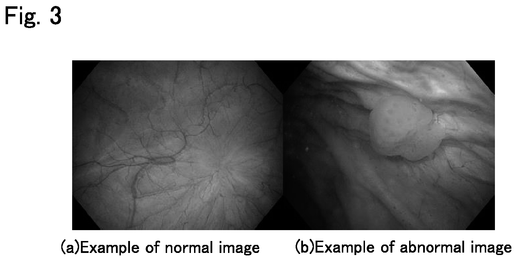

The cystoscopic images used in this experiment were those captured during examinations for bladder cancer at the University of Tsukuba Hospital. A sample of the cystoscopic images is shown in FIG. 3. With respect to the labels of the cystoscopic images, images containing a lesion are classified as "abnormal," and those not containing a lesion are classified as "normal." Whether a lesion is present in an image is determined by a urology specialist. Among the image data, the training data consisted of 8,812 images (abnormal: 1,259 images; normal: 7,553 images), and the test data consisted of 422 images (abnormal: 87 images; normal: 335 images).

During transfer learning of the AI model using the cystoscopic images, data augmentation process was employed. In the data augmentation process, rotation and flipping of the training images were performed. For image rotation, the images were rotated at 30° intervals within a range from -60° to 60°, and the images at -60°, -30°, 0°, 30°, and 60° were used for training. Through this process, the number of images used for training increased to 44,060 images (abnormal: 6,295 images; normal: 37,765 images).

The experiments of the present embodiment were conducted with the approval of the Ethics Committee of the University of Tsukuba Hospital (No. R01-051) and the National Institute of Advanced Industrial Science and Technology (No. I2019-0204). An opt-out procedure was adopted when obtaining consent from patients for participation in the study.

In addition, the learning conditions for transfer learning were as follows: the optimization algorithm RAdam was used, the learning rate was set to 0.001 (reduced to one-tenth at 30 and 50 epochs), the loss function was cross-entropy with weights assigned according to the inverse ratio of the number of images, and learning was performed for up to 60 epochs.

### (Evaluation method)

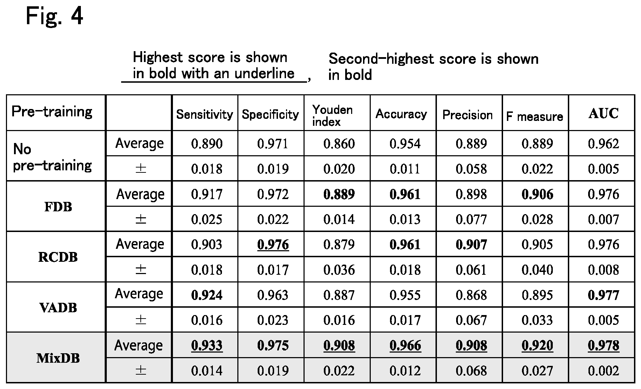

To evaluate the classification performance of the AI model that underwent transfer learning, the values of accuracy, precision, F-measure, Youden index (sensitivity - (1 - specificity)), and the area under the curve (AUC) based on the receiver operating characteristic curve (ROC curve) were calculated, and comparisons of classification performance were conducted for each pre-training database. The values obtained by applying the cutoff at the threshold that maximized the Youden index were presented in FIG. 4.

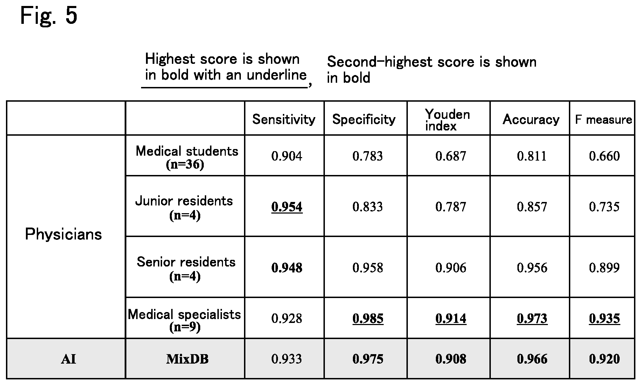

Furthermore, to compare the classification performance with that of actual urologists, the results reported in the paper described in Non-Patent Literature 5 were referenced (see FIG. 5). It should be noted that the 422 cystoscopic images used as test data in the present experiment are the same images used in Non-Patent Literature 5 when evaluating the classification performance of physicians.

### (Experimental results)

### Experiment 1:

The classification performance of the AI model that was pre-trained using automatically generated images and the classification performance of AI model that was trained using only cystoscopic images are shown in a table in FIG. 4. In the table in FIG. 4, FDB indicates the results obtained when the pre-training database (FractalDB) described in Non-Patent Literature 1 was used for pre-training, RCDB indicates the results obtained when the pre-training database (RadialContourDB) described in Non-Patent Literature 2 was used for pre-training, and VADB indicates the results obtained when the pre-training database (VisualAtomDB) described in Non-Patent Literature 3 was used for pre-training. In FIG. 4, the highest score is shown in bold with an underline, and the second-highest score is shown in bold. As a result of this experiment, the AI model that was pre-trained using automatically generated images [the AI model pre-trained according to the present embodiment is hereinafter referred to as the MixDB pre-trained model] exhibited higher classification performance than the AI model trained using only cystoscopic images in all evaluation metrics. In particular, the MixDB pre-trained model showed a sensitivity of 0.933, a specificity of 0.975, a Youden index of 0.908, an accuracy of 0.966, a precision of 0.908, an F-measure of 0.920, and an AUC of 0.978, and demonstrated higher performance than the AI models pre-trained using any other single type of automatically generated image in all of the comprehensive evaluation metrics for AI models, namely the Youden index, accuracy, precision, F-measure, and AUC.

### Experiment 2:

A comparison was made between the classification performance of the MixDB pre-trained model, which showed the highest classification performance in Experiment 1, and the classification performance of urologists. The results are shown in FIG. 5. In FIG. 5, the highest score is shown in bold with an underline, and the second-highest score is shown in bold.

From FIG. 5, it can be seen that the MixDB pre-trained model of the present embodiment exhibited classification performance between that of senior urology residents and that of urology specialists in the four comprehensive evaluation metrics-namely, the Youden index, accuracy, precision, and F-measure.

### Experiment 3:

After performing pre-training on the AI model using the same automatically generated images for pe-training as in Experiment 1, a comparison was made among the classification performance of an AI model that was transfer-learned using a small amount (25%) of cystoscopic images, the classification performance of an AI model that was trained using only a small amount (25%) of cystoscopic images, and the results of Experiment 1, in which transfer learning was performed using 100% of the cystoscopic images.

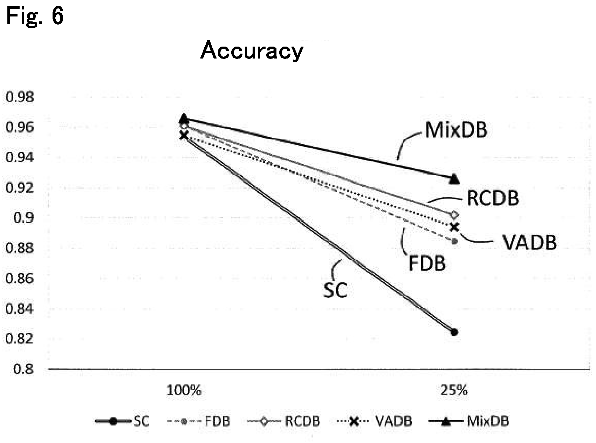

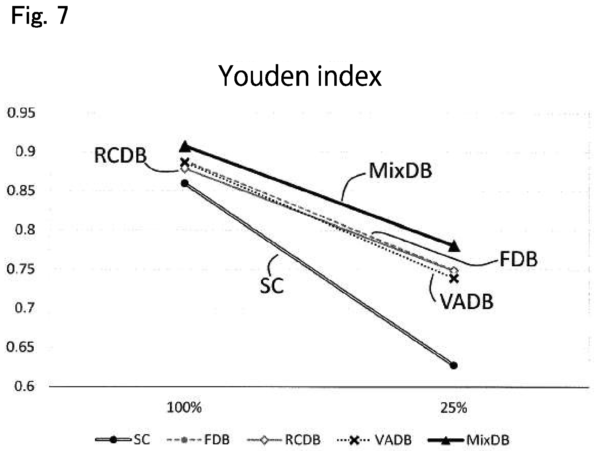

FIG. 6 shows the accuracy with respect to the proportion of cystoscopic images used during transfer learning, among the classification performance results of the AI models for each pre-training database. Furthermore, FIG. 7 shows the Youden index with respect to the proportion of cystoscopic images used during transfer learning, among the classification performance results of the AI models for each pre-training database. In FIGS. 6 and 7, MixDB indicates the results obtained when the mixed database of the present embodiment was used as the pre-training database, FDB indicates the results obtained when the pre-training database FractalDB described in Non-Patent Literature 1 was used, VADB indicates the results obtained when the pre-training database VisualAtomDB described in Non-Patent Literature 3 was used, RCDB indicates the results obtained when the pre-training database RadialContourDB described in Non-Patent Literature 2 was used, and SC indicates the results obtained when an AI model trained solely with cystoscopic images without pre-training was used. From FIGS. 6 and 7, it can be seen that, in the case of MixDB of the present embodiment, even when the number of cystoscopic images as a target task used for transfer learning was small (25%), the decrease in classification performance was the smallest, demonstrating that the pre-training method of MixDB in the present embodiment functions effectively for generating AI models when the amount of target-task data is limited.

### (Conclusion)

In Experiment 1, automatically generated images generated using mathematical formulas in the formula-driven supervised learning system for the AI model were used for the first stage of pre-training, and transfer learning to cystoscopic images was performed in the second stage of pre-training. In this experiment, the AI model that performed transfer learning to cystoscopic images after being pre-trained with MixDB (the MixDB pre-trained model) demonstrated, in the five-fold cross-validation, a Youden index of 0.908, an accuracy of 0.966, and an F-measure of 0.920. According to the results of the comparison experiment with physicians (Experiment 2), these three metrics corresponded to the classification performance between senior urology residents and urology specialists.

Furthermore, in Experiment 3, in which transfer learning was performed using a small amount of cystoscopic images, transfer learning in the second stage was conducted using 25% of the total cystoscopic images. Even when the number of cystoscopic images used for the target task was reduced, the MixDB pre-trained model most effectively suppressed the decrease in classification performance and achieved higher classification performance than any other method. These results suggest that the present embodiment may also serve as an effective method for medical imaging tasks in which the amount of available labeled training data is smaller than that of the cystoscopic images used in the present experiments.

In the above embodiment, the mixing ratio between the plurality of automatically generated images of the first type of image dataset DS1 and the plurality of automatically generated images of the second type of image dataset DS2 used to generate the mixed database 13A was set to 1:1. However, this mixing ratio may be determined by conducting preliminary tests according to the target task. According to the inventors' research, for various target tasks, preliminary testing enables the selection of a mixing ratio that yields higher classification performance in many evaluation metrics compared with the case of pre-training using an image dataset generated with a single mathematical formula, as in the conventional techniques described in Non-Patent Literatures 1 to 3. At present, the known mixing ratios between the first type of image dataset DS1 and the second type of image dataset DS2 range from 3:1 to 1:3. Even in cases where classification performance is inferior in some evaluation metrics, the mixed database may still be usable depending on the nature and purpose of the target task.

Moreover, in the present embodiment, although the first mathematical formula is a formula for generating the image dataset DS1 consisting of shape and pattern images, and the second mathematical formula is a formula for generating the image dataset DS2 consisting of contour images, it is of course possible to use other mathematical formulas depending on the target task. For such other mathematical formulas as well, suitable formulas can be selected by conducting experiments using various formulas for each target task.

Furthermore, in the above embodiment, although the AI model pre-trained using the AI model formula-driven supervised learning system 1 was trained in two stages by performing transfer learning using cystoscopic images (real images), the present invention merely requires the use of an AI model that has been pre-trained using the AI-model formula-driven supervised learning system 1, and the type of transfer learning performed in the second stage may be selected arbitrarily.

Moreover, the transfer learning performed when training is conducted in two stages is not limited to the specific transfer learning described in the above embodiment.

In addition, when performing pre-training, the images used may be obtained by a center-crop method, in which the usable central region of the image is used, or a random-crop method may be adopted, in which image regions shifted appropriately within the usable area are used.

Furthermore, in the above embodiment, although two types of mathematical formulas were used, the present invention can also be applied to cases in which two or more types of mathematical formulas are used to generate two or more types of image datasets, and the mixed database is generated by mixing two or more such image dataset.

### INDUSTRIAL APPLICABILITY

According to the present invention, in the method for performing formula-driven supervised learning for AI model and system therefore in which two or more image datasets are generated using mathematical formulas, a mixed database is generated by mixing two or more image datasets, and the AI model is pre-trained using the mixed database. As a result, it becomes possible to provide a pre-trained AI model that can be applied to a target task with higher accuracy than in the conventional techniques.

### REFERENCE SIGNS

1...System for performing formula-driven supervised learning for an AI-model
2...System for generating a transfer-learned AI model
11...First image data generation section
12...Second image data generation section
13...Mixed database generation section
13A...Mixed database
14...AI model learning section
15...Transfer learning section

## Claims

1. A method for performing formula-driven supervised learning for an AI model comprising:
generating two or more image datasets, each comprising two or more types of images respectively generated automatically using two or more mathematical formulas;
mixing the two or more image datasets to generate a mixed database; and
pre-training the AI model using the mixed database.

2. A method for performing formula-driven supervised learning for an AI model comprising:
generating a first type of image dataset comprising images automatically generated using a first mathematical formula;
generating a second type of image dataset comprising images automatically generated using a second mathematical formula;
generating a mixed database obtained by mixing the first type of image dataset and the second type of image dataset; and
pre-training the AI model using the mixed database.

3. The method for performing formula-driven supervised learning for an AI model according to Claim 2,
wherein the first mathematical formula is a formula for generating an image dataset of shapes or patterns, and
the second mathematical formula is a formula for generating an image dataset of contour images.

4. The method for performing formula-driven supervised learning for an AI model according to Claim 3,
wherein a mixing ratio of the first type of image dataset and the second type of image dataset is determined in accordance with a target task.

5. The method for performing formula-driven supervised learning for an AI model according to Claim 4,
wherein the target task is endoscopic diagnostic support, and
the mixing ratio of the first type of image dataset and the second type of image dataset is a mixing ratio determined by a preliminary experiments conducted in accordance with the target task.

6. A method for generating a transfer-learned AI model comprising;
generating the transfer-learned AI model using an AI model generated by the method for performing formula-driven supervised learning for an AI model according to Claim 5 and teacher real images of a target task.

7. The method for generating a transfer-learned AI model according to Claim 6,
wherein the target task is endoscopic diagnostic support, and
wherein a fully connected layer of the AI model is modified to perform binary classification based on whether a tumor is included in an image, and
transfer learning is performed on all layers of the AI model to generate the transfer-learned AI model.

8. An AI-model formula-driven supervised learning system comprising
a first image dataset generation section configured to generate a first type of image dataset comprising images automatically generated using a first mathematical formula;
a second image dataset generation section configured to generate a second type of image dataset comprising images automatically generated using a second mathematical formula;
a mixed database generation section configured to generate a mixed database obtained by mixing the first type of image dataset and the second type of image dataset; and
a learning section configured to pre-train the AI model using the mixed database.

9. The AI-model formula-driven supervised learning system according to Claim 8,
wherein the first mathematical formula is a formula for generating an image dataset of shapes or patterns and the second mathematical formula is a formula for generating an image dataset of contour images.

10. A system for generating a transfer-learned AI model, comprising a transfer learning section configured to perform transfer learning using an AI model generated by the AI-model formula-driven supervised learning system according to Claim 9 to generate the transfer-learned AI model.

11. The system for generating a transfer-learned AI model according to Claim 10,
wherein the transfer learning section modifies a fully connected layer of the AI model that has undergone the pre-training so as to perform binary classification based on whether a target is included in an image, and performs transfer learning on all layers of the AI model to generate the transfer-learned AI model.
